# EUROPÄISCHE PATENTSCHRIFT

(11) **EP 3 891 870 B1**
(45) Veröffentlichungstag und Bekanntmachung des Hinweises auf die Patenterteilung: **23.07.2025**
(21) Anmeldenummer: 19802221.2
(22) Anmeldetag: 20.11.2019
(51) Int. Cl.: H02K 5/15, H02K 7/14, H02K 11/215, H02K 5/167

(54) **BÜRSTENLOSER ELEKTROMOTOR**
BRUSHLESS ELECTRIC MOTOR
MOTEUR ÉLECTRIQUE SANS BALAI

(30) Priorität: 04.12.2018 EP 18209993
(43) Veröffentlichungstag der Anmeldung: 13.10.2021
(73) Patentinhaber: Hilti Aktiengesellschaft, 9494 Schaan (LI)
(72) Erfinder: SCHMID, Tobias, 86875 Emmenhausen (DE); BURGER, Helmut, 86944 Unterdießen (DE); DIETL, Lothar, 86916 Kaufering (DE)
(74) Vertreter: Hilti Aktiengesellschaft Corporate Intellectual Property
(86) Internationale Anmeldenummer: PCT/EP2019/081932
(87) Internationale Veröffentlichungsnummer: WO 2020/114773

(56) Entgegenhaltungen:
- DE-A1- 102008 037 737
- RO-A0- 127 331
- US-A1- 2017 288 499

## Beschreibung

Die vorliegende Erfindung betrifft einen bürstenlosen Elektromotor für eine elektrische Handwerkzeugmaschine. Der der Elektromotor weist ein Lagerschild und eine an dem Lagerschild angeordnete Hall-Platine auf.

Bürstenlose Elektromotoren der eingangs genannten Art sind grundsätzlich aus dem Stand der Technik bekannt und kommen beispielsweise in modernen Handwerkzeugmaschinen zum Einsatz. Die Hall-Platine weist typischerweise ein oder mehrere Hall-Sensoren zum Erkennen einer Rotorlage eines Rotors des Elektromotors auf, wodurch eine sensorbasierte elektronische Kommutierung erfolgen kann.

Es ist Aufgabe der vorliegenden Erfindung einen einfach montierbaren/demontierbaren Elektromotor bereitzustellen.

Die Aufgabe wird dadurch gelöst, dass die Hall-Platine mittels eines elastischen O-Rings axial am Lagerschild fixiert ist. Die Erfindung schliesst die Erkenntnis ein, dass Hall-Platinen bei Elektromotoren des Standes der Technik typischerweise mittels Verschrauben oder Heißverstemmen befestigt sind. Im Falle des Verschraubens führt dies zu einem erhöhten Montageaufwand. Durch das Heißverstemmen wird eine zerstörungsfreie Demontage der Hall-Platine verhindert oder zumindest deutlich erschwert. Aus der DE 10 2008 037737 A1 ist bekannt, die Hall-Platine mittels eines elastischen O-Ringes zu fixieren, der die Hall-Platine axial auf dem Lagerschild fixiert.

Die Hall-Platine ist auch bei dem erfindungsmäßen bürstenlosen Elektromotor mittels eines elastischen O-Rings axial am Lagerschild fixiert, sodass zum einen Montageaufwand (bei vergleichsweise kompakter Bauweise) verringert ist und zum anderen - im Sinne einer Funktionsintegration - eine exakte axiale Positionierung der Hall-Platine durch die Spannwirkung des elastischen O-Rings gewährleistet wird. Es hat sich als vorteilhaft herausgestellt, wenn die Hall-Platine ausschließlich mittels des O-Rings axial am Lagerschild fixiert ist.

Vorzugsweise ist das Lagerschild ein B-Lagerschild, d.h. das der Antriebsseite des Elektromotors gegenüberliegende Lagerschild. Die Hall-Platine und der O-Ring sind vorzugsweise auf einer rotorabgewandten Seite des Lagerschilds befindlich. Das Lagerschild kann mit einem Stator des Elektromotors verbunden sein. Das Lagerschild und der Stator können einstückig miteinander ausgebildet sein.

Erfindungsgemäß weist das Lagerschild ein zentrales Lager zur Aufnahme einer Rotorachse auf. Das zentrale Lager kann über wenigstens einen radialen Haltesteg an dem Lagerschild befestigt sein.

Es hat sich als vorteilhaft herausgestellt, wenn die Hall-Platine in axialer Richtung gegen den wenigstens einen radialen Haltesteg abgestützt ist. Erfindungsgemäß ist an dem zentralen Lager wenigstens ein Stützkragen ausgebildet, gegen den der O-Ring abgestützt ist. Vorzugsweise sind drei gleichmäßig voneinander beabstandete Stützkragen vorgesehen. Der Stützkragen kann eine Anlagefläche für den O-Ring aufweisen, die schräg zur Rotorachse orientiert ist. Ein zwischen Rotorachse und Flächennormale der Anlagefläche eingeschlossener Winkel kann beispielsweise weniger als 90 Grad, vorzugsweise zwischen 40 und 60 Grad betragen.

In einer weiteren bevorzugten Ausgestaltung ist die Hall-Platine scheibenförmig mit einer konzentrischen hohlzylindrischen Ausnehmung ausgebildet. Vorzugsweise ist ein Innendurchmesser der Ausnehmung größer, als ein Außendurchmesser des zentralen Lagers einschließlich des wenigstens einen Stützkragen. Derart kann die Hall-Platine axial auf das zentrale Lageraufgeschoben und anschließend durch den O-Ring formschlüssig in axialer Richtung gesichert werden.

Die Erfindung wird ebenfalls gelöst durch eine elektrische Handwerkzeugmaschine, vorzugsweise eine akkubetriebene Handwerkzeugmaschine, mit einem Elektromotor nach der vorbeschriebenen Art.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein erstes bevorzugtes Ausführungsbeispiel eines erfindungsgemäßen bürstenlosen Elektromors mit Blick auf die rotorabgewandte Seite;
- Figur 2: ein Schnitt durch das Lagerschild des Elektromotors der Figur 1; und
- Figur 3: einen rotorseitigen Blick auf das Lagerschild des Elektromotors der Figur 1.

### Ausführungsbeispiel:

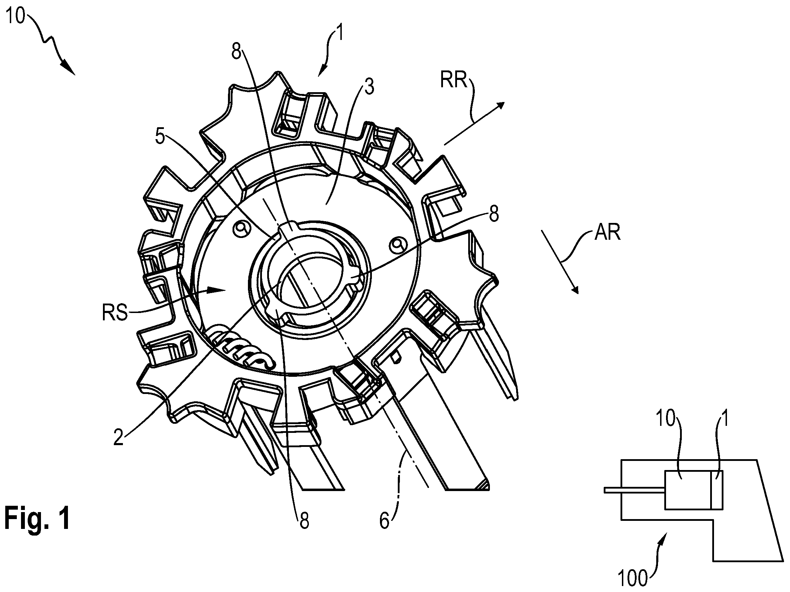

Ein bevorzugtes Ausführungsbeispiel eines erfindungsgemäßen bürstenlosen Elektromotors 10 mit Blick auf die rotorabgewandte Seite RS ist in Figur 1 dargestellt. Der Elektromotor 10 weist ein Lagerschild 1 und eine an dem Lagerschild 1 angeordnete Hall-Platine 3 auf. Im vorliegend dargestellten Ausführungsbeispiel ist das Lagerschild 10 ein B-Lagerschild, d.h. das der Antriebsseite des Elektromotors 10 gegenüberliegende Lagerschild. Aus Gründen der Darstellbarkeit ist der Elektromotor 10 nicht vollständig gezeigt, d.h. insbesondere eine Statorwicklung oder ein Statorpaket (abgesehen von einigen mit dem Lagerschild 1 verbundenen Statorsegmenten) ist in Figur 1 nicht dargestellt.

Erfindungsgemäß ist die Hall-Platine 3 mittels eines elastischen O-Rings 5 axial, d.h. in axialer Richtung AR, am Lagerschild 1 fixiert. Vorliegend ist die Hall-Platine 3 ausschließlich mittels des O-Rings 5 axial am Lagerschild 1 fixiert. Die Hall-Platine 3 und der O-Ring 5 sind beide auf der in Figur 1 gezeigten rotorabgewandten Seite RS des Lagerschilds 1 befindlich.

In Figur 1 ist gut zu erkennen, dass das Lagerschild 1 ein zentrales Lager 2 zur Aufnahme einer Rotorachse 6 aufweist. Ein Rotor des Elektromotors 10 selbst ist aus Gründen der Darstellbarkeit in Figur 1 nicht gezeigt. An dem zentralen Lager 2 sind drei Stützkragen 8 ausgebildet ist, gegen den der O-Ring 5 in axialer Richtung AR abgestützt ist.

Auf der unteren Seite rechts der Figur 1 ist schematisch eine elektrische Handwerkzeugmaschine 100 dargestellt, die mit einem erfindungsgemäßen Elektromotor 10 ausgestattet ist.

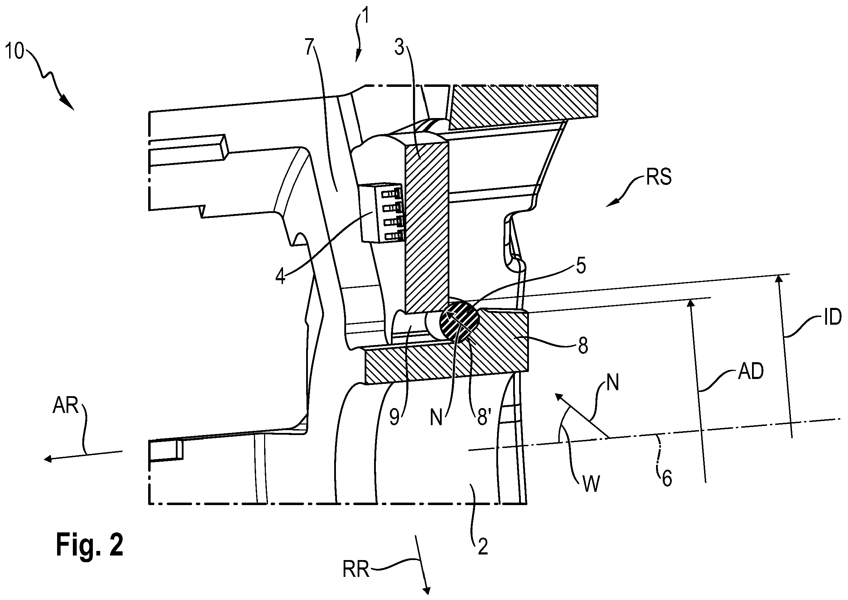

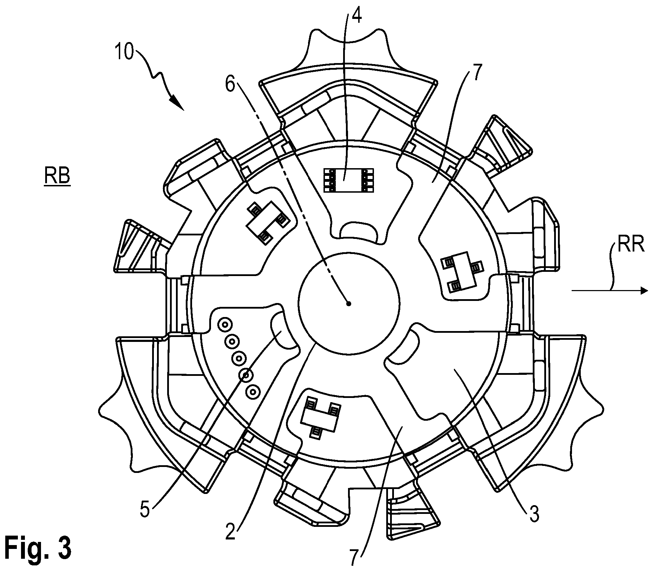

Figur 2 zeigt ein Schnitt durch das Lagerschild 1 des Elektromotors 10 der Figur 1. Gut zu erkennen ist, dass das zentrale Lager 2 über einen radialen Haltesteg 7 an dem Lagerschild 1 befestigt ist (vgl. auf Figur 3). Dabei ist die Hall-Platine 3 einerseits in axialer Richtung AR gegen den radialen Haltesteg 7 abgestützt. Andererseits ist der elastische O-Ring 5 in axialer Richtung AR an dem Stützkragen 8, der an dem zentralen Lager 2 ausgebildet ist, abgestützt. Somit ist die Hall-Platine 3, die hier beispielhaft einen Hallsensor 4 aufweist, mittels des elastischen O-Rings 5 axial am Lagerschild 1 fixiert.

Der Stützkragen 8 weist eine Anlagefläche 8' für den O-Ring 5 auf, die schräg zur Rotorachse 6 orientiert ist. Dabei beträgt ein zwischen Rotorachse 6 und Flächennormale N der Anlagefläche 8' eingeschlossener Winkel W weniger als 90 Grad. Im vorliegend dargestellten Ausführungsbeispiel beträgt der Winkel W etwa 45 was einen guten Kompromiss zwischen Spannwirkung und Montierbarkeit darstellt.

Wie der Figur 2 entnommen werden kann, ist die Hall-Platine 3 scheibenförmig mit einer konzentrischen hohlzylindrischen Ausnehmung 9 ausgebildet ist. Ein Innendurchmesser ID der Ausnehmung 9 ist dabei größer, als ein Außendurchmesser AD des zentralen Lagers 2 einschließlich des Stützkragen 8. Somit kann die Hall-Platine 3 in axialer Richtung AR auf das zentrale Lager 2 aufgeschoben und anschließend durch den O-Ring 5 formschlüssig in axialer Richtung AR gesichert werden. Dabei ist exakte Positionierung der Hall-Platine 5 in axialer Richtung AR durch die Spannwirkung des elastischen O-Rings 5 gewährleistet.

Figur 3 zeigt nun einen rotorseitigen Blick RB auf das Lagerschild des Elektromotors der Figur 1. Gut zu erkennen ist das zentrale Lager 2 und die koaxial zu diesem angeordnete Rotorachse 6. Das zentrale Lager 2 ist im vorliegend dargestellten Ausführungsbeispiel über sechs Haltestege 7, die sich jeweils in radialer Richtung RR erstecken, an dem Lagerschild 1 befestigt.

Wie der Figur 3 entnommen werden kann, ist die scheibenförmige Hall-Platine 3 durch den O-Ring 5, der abschnittsweise durch die Hall-Platine 3 hindurch erkennbar ist, in radialer Richtung RR exakt positioniert. Dies im Sinne einer Funktionsintegration gleichzeitig zu der bereits mit Bezug auf Figur 2 erwähnten exakten Positionierung der Hall-Platine 5 in axialer Richtung AR durch die Spannwirkung des elastischen O-Rings 5.

### Bezugszeichenliste

- 1: Lagerschild
- 2: zentrales Lager
- 3: Hall-Platine
- 4: Hall-Sensor
- 5: O-Ring
- 6: Rotorachse
- 7: radialer Haltesteg
- 8: Stützkragen
- 8': Anlagefläche
- 9: Ausnehmung
- 10: Bürstenloser Elektromotor

- 100: Elektrische Handwerkzeugmaschine

- AD: Außendurchmesser
- AR: Axiale Richtung
- ID: Innendurchmesser
- N: Flächennormale
- RB: Rotorzugewandte Seite
- RR: Radiale Richtung
- RS: Rotorabgewandte Seite
- W: Winkel

## Patentansprüche

1. Bürstenloser Elektromotor (10) für eine elektrische Handwerkzeugmaschine (100), wobei der Elektromotor (10) ein Lagerschild (1) und eine an dem Lagerschild (1) angeordnete Hall-Platine (3) aufweist,
**wobei** die Hall-Platine (3) mittels eines elastischen O-Rings (5) axial am Lagerschild (1) fixiert ist, und wobei das Lagerschild (1) ein zentrales Lager (2) zur Aufnahme einer Rotorachse (6) aufweist **dadurch gekennzeichnet, dass** an dem zentralen Lager (2) wenigstens ein radial nach außen vorstehender Stützkragen (8) ausgebildet ist, gegen den der O-Ring (5) abgestützt ist.

2. Elektromotor (10) nach Anspruch 1,
**dadurch gekennzeichnet, dass** die Hall-Platine (3) ausschließlich mittels des O-Rings (5) axial am Lagerschild (1) fixiert ist.

3. Elektromotor (10) nach Anspruch 1,
**dadurch gekennzeichnet, dass** das zentrale Lager (2) über wenigstens einen radialen Haltesteg (7) an dem Lagerschild (1) befestigt ist.

4. Elektromotor (10) nach Anspruch 3,
**dadurch gekennzeichnet, dass** die Hall-Platine (3) in axialer Richtung (AR) gegen den wenigstens einen radialen Haltesteg (7) abgestützt ist.

5. Elektromotor (10) nach Anspruch 1,
**dadurch gekennzeichnet, dass** der Stützkragen (8) eine Anlagefläche (8') für den O-Ring (5) aufweist, die schräg zur Rotorachse (6) orientiert ist.

6. Elektromotor (10) nach Anspruch 5,
**dadurch gekennzeichnet, dass** ein zwischen Rotorachse (6) und Flächennormale (N) der Anlagefläche (8') eingeschlossener Winkel (W) weniger als 90 Grad, vorzugsweise zwischen 40 und 60 Grad beträgt.

7. Elektromotor (10) nach einem der vorangehenden Ansprüche,
**dadurch gekennzeichnet, dass** die Hall-Platine (3) scheibenförmig mit einer konzentrischen hohlzylindrischen Ausnehmung (9) ausgebildet ist.

8. Elektromotor (10) nach Anspruch 7
**dadurch gekennzeichnet, dass** ein Innendurchmesser (ID) der Ausnehmung (9) größer ist, als ein Außendurchmesser (AD) des zentralen Lagers (2) einschließlich des wenigstens einen Stützkragen (8).

9. Elektromotor (10) nach einem der vorangehenden Ansprüche,
**dadurch gekennzeichnet, dass** die Hall-Platine (3) und der O-Ring (5) auf einer rotorabgewandten Seite des Lagerschilds (1) befindlich sind.

10. Elektrische Handwerkzeugmaschine (100) mit einem Elektromotor (10) nach einem der vorangehenden Ansprüche.

## Claims

1. Brushless electric motor (10) for an electric handheld power tool (100), wherein the electric motor (10) has an end plate (1) and a Hall board (3) which is arranged on the end plate (1),
wherein the Hall board (3) is axially fixed to the end plate (1) by means of an elastic O-ring (5), and wherein the end plate (1) has a central bearing (2) for receiving a rotor axis (6), **characterized in that** at least one radially outwardly projecting supporting collar (8), against which the O-ring (5) is supported, is formed on the central bearing (2).

2. Electric motor (10) according to Claim 1,
**characterized in that** the Hall board (3) is axially fixed to the end plate (1) exclusively by means of the O-ring (5).

3. Electric motor (10) according to Claim 1,
**characterized in that** the central bearing (2) is fastened to the end plate (1) by means of at least one radial retaining web (7).

4. Electric motor (10) according to Claim 3,
**characterized in that** the Hall board (3) is supported against the at least one radial retaining web (7) in the axial direction (AR).

5. Electric motor (10) according to Claim 1,
**characterized in that** the supporting collar (8) has a contact area (8') for the O-ring (5), which contact area is oriented obliquely in relation to the rotor axis (6).

6. Electric motor (10) according to Claim 5,
**characterized in that** an angle (W) which is enclosed between the rotor axis (6) and the surface normal (N) of the contact area (8') is less than 90 degrees, preferably between 40 and 60 degrees.

7. Electric motor (10) according to one of the preceding claims,
**characterized in that** the Hall board (3) is designed, in the form of a disc, with a concentric hollow-cylindrical recess (9).

8. Electric motor (10) according to Claim 7,
**characterized in that** an inside diameter (ID) of the recess (9) is greater than an outside diameter (AD) of the central bearing (2) including the at least one supporting collar (8).

9. Electric motor (10) according to one of the preceding claims,
**characterized in that** the Hall board (3) and the O-ring (5) are located on a side of the end plate (1) that is averted from the rotor.

10. Electric handheld power tool (100) comprising an electric motor (10) according to one of the preceding claims.

## Revendications

1. Moteur électrique sans balais (10) pour un outil électrique à main (100), le moteur électrique (10) comportant une plaque de support (1) et une plaque à effet Hall (3) agencée sur la plaque de support (1),
la plaque à effet Hall (3) étant fixée axialement sur la plaque de support (1) au moyen d'un joint torique élastique (5), et la plaque de support (1) comportant un palier central (2) destiné à recevoir un axe de rotor (6), **caractérisé en ce qu'**au moins une collerette d'appui (8) faisant saillie radialement vers l'extérieur est formée sur le palier central (2), contre laquelle prend appui le joint torique (5).

2. Moteur électrique (10) selon la revendication 1,
**caractérisé en ce que** la plaque à effet Hall (3) est fixée axialement sur la plaque de support (1) exclusivement au moyen du joint torique (5).

3. Moteur électrique (10) selon la revendication 1,
**caractérisé en ce que** le palier central (2) est fixé à la plaque de support (1) par au moins une nervure de retenue radiale (7).

4. Moteur électrique (10) selon la revendication 3,
**caractérisé en ce que** la plaque à effet Hall (3) est, dans la direction axiale (AR), en appui contre ladite au moins une nervure de retenue radiale (7).

5. Moteur électrique (10) selon la revendication 1,
**caractérisé en ce que** la collerette d'appui (8) présente une surface d'appui (8') pour le joint torique (5), orientée obliquement par rapport à l'axe du rotor (6).

6. Moteur électrique (10) selon la revendication 5,
**caractérisé en ce qu'**un angle (W) compris entre l'axe du rotor (6) et la normale (N) à la surface d'appui (8') est inférieur à 90 degrés, de préférence compris entre 40 et 60 degrés.

7. Système (10) de raccordement de tuyau selon l'une des revendications précédentes,
**caractérisé en ce que** la plaque à effet Hall (3) est réalisée en forme de disque avec un évidement cylindrique creux concentrique (9).

8. Moteur électrique (10) selon la revendication 7,
**caractérisé en ce que** le diamètre intérieur (ID) de l'évidement (9) est supérieur au diamètre extérieur (AD) du palier central (2), y compris ladite au moins une collerette d'appui (8).

9. Système (10) de raccordement de tuyau selon l'une des revendications précédentes,
**caractérisé en ce que** la plaque à effet Hall (3) et le joint torique (5) sont situés sur un côté de la plaque de support (1) opposé au rotor.

10. Outil électrique à main (100) équipé d'un moteur électrique (10) selon l'une des revendications précédentes.
